Europäisches Patentamt

European Patent Office

Office européen des brevets

(11) Numéro de publication: **0 098 183**
**B1**

(12) **FASCICULE DE BREVET EUROPEEN**

(45) Date de publication du fascicule du brevet:
**29.10.86**

(21) Numéro de dépôt: **83401113.2**

(22) Date de dépôt: **02.06.83**

(51) Int. Cl.⁴: **F 42 C 13/04,** **G 01 S 13/28,** **G 01 S 13/18**

(54) **Radar de proximité.**

(30) Priorité: **28.06.82 FR 8211268**

(43) Date de publication de la demande:
**11.01.84 Bulletin 84/2**

(45) Mention de la délivrance du brevet:
**29.10.86 Bulletin 86/44**

(84) Etats contractants désignés:
**BE CH DE FR GB IT LI NL SE**

(56) Documents cités:
**US - A - 4 014 021**
**US - A - 4 236 157**
**US - A - 4 297 702**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Delon, Patrice Charles Gaston, 8, rue Louis-Philippe, F-92200 Neuilly (FR)**
Inventeur: **Fourreaux, Gérard Daniel, 22, rue Labélonge, F-78600 Chatou (FR)**
Inventeur: **Nicolas, Michel Jacques Robert, 142, boulevard Masséna, F-75017 Paris (FR)**
Inventeur: **Sebilet, Bruno, 16, rue Perronet, F-92150 Suresnes (FR)**

(74) Mandataire: **Moinat, François, S.N.E.C.M.A. Service des Brevets Boîte Postale 81, F-91003 Evry Cedex (FR)**

ACTORUM AG

## Description

La présente invention concerne un radar de proximité et plus spécifiquement un radar destiné à détecter une distance déterminée le séparant d'une cible.

Il est déjà connu, dans une telle installation, d'émettre un signal modulé en phase selon une séquence de signaux logiques du type pseudo-aléatoire, le signal en retour, après réflexion sur la cible, faisant l'objet d'une corrélation avec le signal émis affecté d'un retard constant qui correspond au temps du trajet aller et retour sur la distance que l'on désire détecter. Cette corrélation est une opération bien connue de l'homme de l'art; elle consiste en une multiplication des signaux l'un par l'autre, suivie d'un filtrage ou d'une intégration du résultat. Dans la fonction de corrélation ainsi obtenue, la tension obtenue a un niveau généralement très faible, sauf lorsque le retard introduit correspond précisément au temps mis par le signal émis pour effectuer son trajet, la variation de la tension en fonction de la différence des retards ayant alors la forme d'un triangle isocèle dont le sommet correspond à la tension maximale et traduit un écart de retard nul.

Lorsque la tension de cette fonction de corrélation dépasse un seuil pré-déterminé, un dispositif logique délivre une information relative au passage du radar à la distance déterminée de la cible.

On comprend aisément que, si le dispositif porteur d'un tel radar de proximité évolue dans un milieu fortement perturbé du point de vue radioélectrique, des tensions parasites, supérieures au seuil pré-déterminé, peuvent apparaître et déclencher une information erronée. La présente invention a pour objet de remédier à un tel inconvénient.

Le radar de proximité conforme à l'invention est défini par la revendication 1. Un radar comportant les caractéristiques du préambule de ladite revendication est connu de US-A-4 014 021.

Le passage d'émission en réception et réciproquement ainsi que le choix du nombre de bits, n ou n', du retard de la séquence pseudo-aléatoire et la mise en service, ou la neutralisation, de la commande automatique de gain se font au moyen de commutateurs synchrones dont la fréquence de fonctionnement est un sous-multiple de la fréquence de l'horloge pilotant le registre générateur de la séquence pseudo-aléatoire.

En se référant aux figures schématiques ci-jointes, on va décrire un exemple de mise en œuvre de l'invention donné à titre non limitatif.

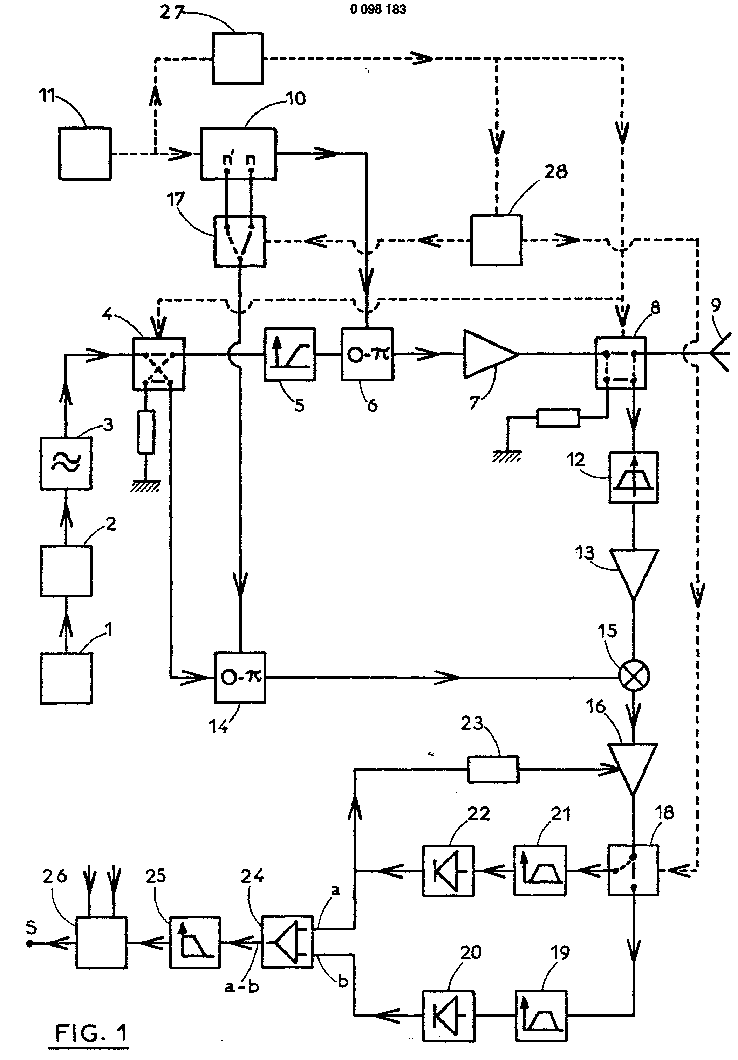

La figure 1 représente, sous forme de bloc diagramme, un dispositif de radar conforme à l'invention.

La figure 2 représente graphiquement la tension U de corrélation en fonction de la distance D du radar à la cible.

Dans l'exemple représenté, la porteuse est générée par un oscillateur à quartz 1 suivi d'un multiplicateur de fréquence 2 et d'un filtre 3. Cette porteuse, après passage dans un premier commutateur émission-réception 4 (dont la position d'émission est représentée en traits pleins et la position réception en pointillés) traverse un filtre passe-haut 5 suivi d'un modulateur 6 de phase O–$\pi$ et d'un amplificateur final 7 du signal d'émission. La sortie de cet amplificateur 7 est reliée, par l'intermédiaire d'un second commutateur émission-réception 8 (représenté en traits pleins dans la position d'émission et en pointillés dans la position réception), à un aérien unique 9.

La modulation de phase O-$\pi$ du signal d'émission est effectuée au niveau du modulateur 6 par und séquence pseudo-aléatoire issue d'un registre à décalage rebouclé 10 lui-même piloté par une horloge constituée d'un oscillateur 11 à fréquence ajustable.

Lorsque les commutateurs 4 et 8 sont en position de réception, le signal en retour provenant de la cible et recueilli par l'aérien 9 est transmis, par l'intermédiaire d'un filtre passe-bande 12, centré sur la fréquence porteuse, à un amplificateur 13 à faible bruit.

Par ailleurs, dans cette phase de réception, le signal à la fréquence porteuse est transmis, par l'intermédiaire du commutateur 4 à un second modulateur de phase O-$\pi$ 14 dans lequel elle est modulée en phase selon une séquence pseudo-aléatoire, identique à celle du signal émis, mais retardée, par rapport à cette dernière, d'un nombre entier n de bits tel que nt soit égal au temps d'un trajet aller et retour du signal sur la distance à détecter (t étant la durée d'un bit).

Un multiplieur 15 assure la corrélation des signaux de réception issu de l'amplificateur 13 et du signal modulé issu du modulateur 14. Ce multiplieur 15 qui reçoit, de l'amplificatuer 13, la fréquence porteuse décalée du Doppler dû à la vitesse relative de la cible, et modulée en phase par la séquence pseudo-aléatoire, et, du modulateur 14, la fréquence porteuse modulée par la séquence pseudo-aléatoire retardée, permet d'obtenir à sa sortie un signal constitué de la fréquence Doppler. Ce signal de sortie basse fréquence a une amplitude faible, sauf lorsque le retard nt correspond précisément au temps mis par le signal émis pour revenir sur l'antenne après réflexion sur la cible, c'est-à-dire lorsque les séquences pseudo-aléatoires des deux signaux sont en phase. Le signal issu du multiplieur 15 est envoyé sur un amplificateur 16 doublé d'un filtre passe-bande correspondant à la plage de fréquence Doppler désirée.

Un tel dispositif est bien connu de l'homme de métier et l'on sait que lorsqu'il évolue dans un milieu fortement perturbé du point de vue radioélectrique, par exemple par un brouilleur, des signaux parasites de forte amplitude sont susceptibles d'apparaître, à la sortie du multiplieur 15. Dans le cas précis de l'utilisation de ce radar de proximité dans la fusée d'une charge militaire, on comprend que sous l'action de tels brouilleurs, le déclenchement de l'explosion puisse se faire de manière intempestive à une altitude nettement supérieure à l'altitude souhaitée.

Un troisième commutateur 17 permet d'affecter le signal de corrélation d'un retard qui est alternativement de nt et n't, n' étant un nombre de bits inférieur à n. En synchronisme avec ce commutateur 17, un quatrième commutateur 18 permet, lorsque le retard est de nt, de transmettre le signal issu de l'amplificateur 16 directement sur un filtre passe-bande 19 suivi d'un détecteur 20 délivrant un singal b et, lorsque le retard est de n't, sur un filtre passe-bande 21 suivi d'un détecteur 22 délivrant un signal a. Mais, dans ce dernier cas, de retard n't, le détecteur 22 est bouclé sur l'amplificateur 16 par une commande automatique de gain 23. Le choix de la bande passante des filtres 19, 21 permet une élimination de la composante alternative introduite par le commutateur 18.

Les positions des commutateurs 17 et 18 sont représentées en traits pleins pour un retard de n bits et en pointillés pour un retard de n' bits.

Un circuit 24 effectue la différence entre les signaux a et b respectivement issus des détecteurs 22 et 20. La différence a–b est transmise à un filtre passe-bas 25 suivi d'un comparateur 26 capable d'effectuer la comparaison du signal a–b, avec deux seuils de niveaux différents.

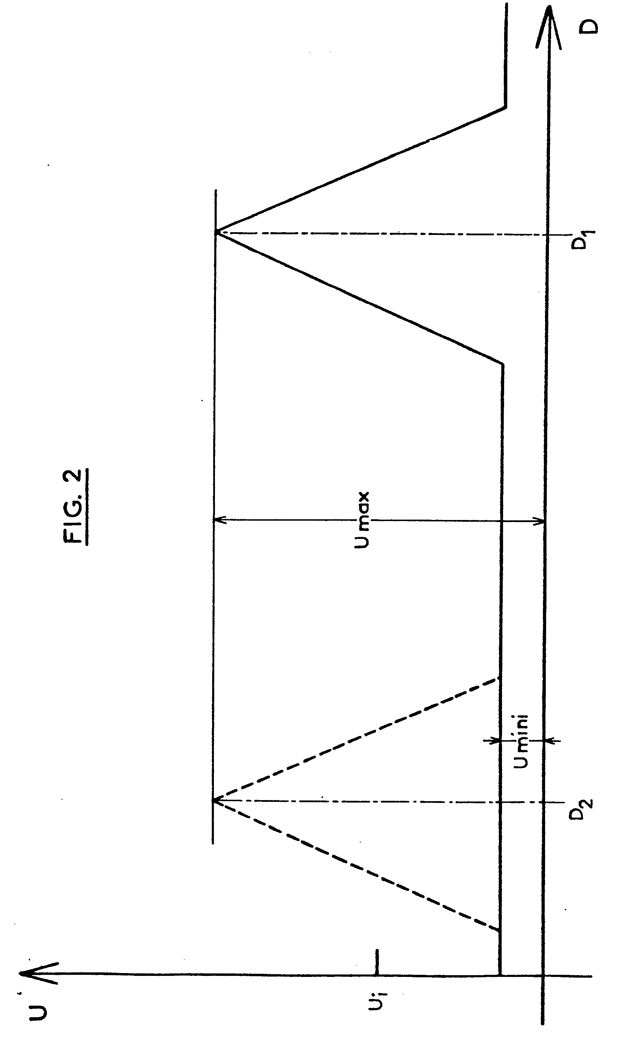

Dans un radar de proximité de tpye connu, la fonction de corrélation (tension obtenue en fonction de la distance radar-cible) est représentée à la figure 2. Cette tension est généralement égale à U mini sauf lorsque le retard nt est approximativement égal au temps mis par le signal émis pour effectuer son trajet, c'est-à-dire deux fois la distance $D_1$ séparant le radar de la cible. Pour cette distance précise, la tension est égale à U max.

L'invention a pour objet d'éviter les perturbations qui seraient consécutives à l'apparition d'une tension intermédiaire Ui qui provoquerait un déclenchement au niveau du comparateur 26. En effet, lorsque le retard introduit sur le signal de corrélation est n't, U max de la tension de corrélation se produit pour une distance $D_2$ inférieure à $D_1$. En conséquence, si un signal d'amplitude Ui apparaît lorsque le retard est n't, il s'agit nécessairement d'un signal parasite dont l'influence va être annulée par la commande automatique de gain 23 qui va désensibiliser l'amplificateur 16. Ainsi, ce signal ne sera pas pris en compte pour la mesure, lors de la corrélation suivante avec le signal retardé de nt.

Par contre, si le signal d'amplitude Ui apparaît lorsque le retard est nt et disparaît lorsque le retard est n't, il s'agit bien du signal utile correspondant à la distance $D_1$, et il est pris en considération puisque, dans ce cas, la commande automatique de gain 23 n'entre pas en fonctionnement pour désensibiliser l'amplificateur 16.

De cette manière, il est possible de séparer les signaux parasites des signaux utiles.

De plus, si la distance $D_1$ est franchie précisément à un instant où le radar se trouve sous l'influence d'un brouilleur, c'est-à-dire à un moment où l'amplificateur 16 est désensibilisé par la commande automatique de gain, la distance $D_2$ correspondant au retard n't est choisi suffisamment faible pour que le support du radar soit sorti de la zone d'influence du brouilleur. En particulier, lorsqu'il s'agit d'une fusée de proximité équipant une charge militaire, la distance $D_1$ correspond à l'altitude normale d'explosion, tandis que la distance $D_2$ correspond à une altitude beaucoup plus faible à laquelle se produit l'auto-destruction du projectile. En effet, si le radar est sorti de la zone d'influence du brouilleur, il n'apparaît qu'un signal très faible à la sortie du détecteur 20 tandis que, à l'altitude $D_2$, apparaît un signal important à la sortie du détecteur 22. Le circuit différenciateur 24 délivre un signal de sortie, de signe différent du précédent et pouvant être utilisé pour la détection du passage à la distance $D_2Z$. Ceci explique la raison pour laquelle le comparateur 26 possède deux seuils de référence correspondant à une même valeur absolue, mais à des signes différents.

La commande des différents commutateurs, 4 et 8 concernant le passage émission-réception et 17 et 18 concernant le choix du retard et la mise en circuit de la commande automatique de gain 23, doit être effectuée en synchronisme à une fréquence qui est un sous-multiple de la fréquence d'horloge de l'oscillateur 11 qui pilote le registre 10 générateur de la séquence pseudo-aléatoire. Ces fréquences sous-multiples sont respectivement obtenues au moyen de diviseurs de fréquence 27 et 28.

## Revendications

1. Radar de proximité destiné à détecter une distance déterminée le séparant d'une cible, du genre dans lequel sont prévus:

– un circuit émetteur (1–9) générant un signal d'émission sous forme d'une porteuse à haute fréquence modulée en phase de façon répétée par une séquence de signaux binaires pseudo-aléatoires,

– un chaîne de réception (12–26) comportant:

i) des moyens corrélateurs (15) destinés à corréler le signal de retour résultant de la réflexion du signal d'émission par une cible avec des premier et deuxième signaux auxiliaires dérivés du signal d'émission en retardant celui-ci pour des première et deuxième périodes de temps correspondant respectivement à un premier nombre n et à un deuxième nombre n' de bits de ladite séquence, avec n' inférieur à n,

ii) des circuits d'évaluation (16, 18–26) recevant les signaux de corrélation produits par les moyens corrélateurs et fournissant un signal de sortie lorsque la distance déterminée est franchie, ledit radar étant caractérisé en ce que:

– il comporte des moyens de contrôle (11, 17) destinés à effectuer une application alternative des deux signaux auxiliaires aux moyens corrélateurs de sorte que la corrélation du signal de retour avec chacun des signaux auxiliaires soit effectuée en alternance,

– les circuits d'évaluation (16, 18–26) comportent en entrée un amplificateur (16) à gain réglable associé à un dispositif (23) de contrôle automatique de gain, ledit dispositif étant agencé de façon à régler le gain en fonction inverse du signal de corrélation obtenu lorsque la corrélation est effectuée sur la base du deuxième signal auxiliaire dont le retard par rapport au singal d'émission correspond à n' bits, et à maintenir le gain à la valeur résultant de ce contrôle lorsque la corrélation est effectuée sur la base du premier signal auxiliaire.

2. Radar de proximité selon la revendication 1, caractérisé en ce que le passage d'émission en réception et réciproquement est assuré par des commutateurs (4, 8) dont la fréquence de fonctionnement est un sous-multiple de la fréquence d'une horloge pilotant un registre générateur (10) de la séquence pseudo-aléatoire.

3. Radar de proximité selon la revendication 2, caractérisé en ce que le choix du premier ou du deuxième signal auxiliaire ainsi que la mise en service, ou la neutralisation, de la commande automatique de gain se fait au moyen de commutateurs synchrones (17, 18) dont la fréquence de fonctionnement est un sous-multiple de la fréquence de l'horloge pilotant le registre générateur de la séquence pseudo-aléatoire, lesdits commutateurs et l'horloge étant contenus dans les moyens de contrôle.

4. Radar de proximité selon l'une des revendications précédentes, caractérisé en ce que chacun des deux signaux résultants des corrélations avec les premier et deuxième signaux auxiliaires est appliqué à une entrée d'un différenciateur (24) par l'intermédiaire d'un filtre passe-bande (19, 21) et d'un dispositif (20, 22) de détection, lesquels éléments font partie des circuits d'évaluation.

5. Radar de proximité selon la revendication 4, caractérisé en ce que la sortie du différenciateur (24) est reliée à un comparateur (26) à deux seuils par l'intermédiaire d'un filtre passe-bas (25) ledit comparateur et ledit filtre étant également contenus dans les circuits d'évaluation.

6. Radar de proximité selon la revendication 5, caractérisé en ce que les deux seuils du comparateurs (26) sont de signes opposés.

**Claims**

1. Proximity radar intended to detect a predetermined distance separating it from a target, fo the kind in which there are provided:
– an emitter circuit (1–9) generating an emission signal in the form of a high frequency carrier phase modulated in a repetitive manner with a sequence of binary pseudo-random signals,
– a reception chain (12–26) comprising:
(i) correlator means (15) intended to correlate the return signal resulting from the reflection of the emission signal by a target with first and second auxiliary signals derived from the emission signal by delaying the latter for first and second time periods respectively corresponding to a first number n and to a second number n' of bits of the said sequence, with n' less than n,
(ii) evaluation circuits (16, 18–26) receiving the correlation signals produced by the correlator means and supplying an output signal when the predetermined distance is exceeded, the said radar being characterized in that:
– it comprises control means (11, 17) intended to effect an alternative application of the two auxiliary signals to the correlator means such that the correlation of the return signal with each of the auxiliary signals will be effected alternately,
– the evaluation circuits (16, 18–26) comprise at the input an amplifier (16) with adjustable gain associated with an automatic gain control device (23), the said device being actuated in such a manner as to adjust the gain as an inverse function of the correlation signal obtained when the correlation is effected on the basis of the second auxiliary signal of which the delay with respect of the emission signal corresponds to n' bits, and to maintain the gain at the resultant value of this control when the correlation is effected on the basis of the first auxiliary signal.

2. Proximity radar according to claim 1, characterized in that switching from emission to reception and reciprocally is effected by commutators (4, 8) of which the operational frequency is a sub-multiple of the frequency of a clock controlling a generating register (10) of the pseudo-random sequence.

3. Proximity radar according to claim 2, characterized in that the choice of the first or fo the second auxiliary signal as well as the putting into service, or the neutralization, of the automatic gain control is carried out by means of synchronous commutators (17, 18) of which the operational frequency is a sub-multiple of the frequency of the clock controlling the generating register of the pseudorandom sequence, the said commutators and the clock being contained within the control means.

4. Proximity radar according to one of the preceding claims, characterized in that each of the two signals resulting from correlations with the first and the second auxiliary signals is supplied to an input of a differentiator (24) through the intermediary of a band pass filter (19, 21) and a detection device (20, 22), which elements form part of the evaluation circuits.

5. Proximity radar according to claim 4, characterized in that the output of the differentiator (24) is connected to a comparator (26) with two thresholds through the intermediary of a band pass filter (25) the said comparator and the said filter being similarly included in the evaluation circuits.

6. Proximity radar according to claim 5, characterized in that the two thresholds of the comparator (26) are of opposed signs.

**Patentansprüche**

1. Annäherungsradar zur Erfassung eines vorbestimmten Abstands von einem Ziel

mit einer Sendeschaltung (1–9 zur Erzeugung eines Sendesignals in Form eines hochfrequenten Trägers, der sich wiederholend mit einer Folge pseudozufälliger binärer Signale phasenmoduliert ist,

sowie mit einer Empfangskette (12–26), die folgende Teile umfasst:

i) Korrelatormittel (15) zum Korrelieren des aus der Reflexion des Sendesignals an einem Ziel resultierenden Echosignals mit einem ersten und einem zweiten Hilfssignal, die aus dem Sendesignal abgeleitet sind, indem dieses um eine erste und eine zweite Zeitspanne verzögert wird, die einer ersten Zahl n bzw. einer zweiten Zahl n' von Bits der genannten Folge entsprechen, wobei n' kleiner ist als n, und

ii) Bewertungsschaltungen (16, 18–26), die die von den Korrelationsmitteln erzeugten Korrelationssignale aufnehmen und ein Ausgangssignal liefern, wenn der vorbestimmte Abstand unterschritten wird,

dadurch gekennzeichnet, dass Steuermittel (11, 17) vorgesehen sind, durch die die beiden Hilfssignale den Korrelationsmitteln abwechselnd zuführbar sind, derart dass das Echosignal abwechselnd mit jedem der Hilfssignale korreliert wird, dass die Bewertungsschaltungen (16, 18–26) an ihrem Eingang einen Verstärker (16) mit regelbarem Verstärkungsgrad aufweisen, dem eine Vorrichtung (23) zur automatischen Steuerung des Verstärkungsgrads zugeordnet ist, die derart angeordnet ist, dass

– sie den Verstärkungsgrad gemäss einer Funktion regelt, die zu dem Korrelationssignal invers ist, das dann erzeugt wird, wenn die Korrelation auf der Basis des zweiten Hilfssignals durchgeführt wird, dessen Verzögerung gegenüber dem Sendesignal n' Bits entspricht,

– und der Verstärkungsgrad auf dem aus dieser Steuerung resultierenden Wert gehalten wird, wenn die Korrelation auf der Basis des ersten Hilfssignals durchgeführt wird.

2. Annäherungsradar nach Anspruch 1, dadurch gekennzeichnet, dass der Übergang von Senden auf Empfang und umgekehrt durch Schalter (4, 8) bewerkstelligt wird, deren Betriebsfrequenz ein Untervielfaches der Frequenz eines Taktgebers ist, der ein Register (10) zur Generierung der pseudozufälligen Folge steuert.

3. Annäherungsradar nach Anspruch 2, dadurch gekennzeichnet, dass die Wahl des ersten oder des zweiten Hilfssignals sowie die Inbetriebnahme oder die Ausserbetriebsetzung der automatischen Steuerung des Verstärkungsgrads durch synchrone Schalter (17, 18) erfolgen, deren Betriebsfrequenz ein Untervielfaches der Frequenz des Taktgebers ist, der das Register zur Generierung der pseudozufälligen Folge steuert, wobei die Schalter und der Taktgeber in den Steuermitteln enthalten sind.

4. Annäherungsradar nach einem der vorhergehenden Ansprüche, dadurch gekennzeichnet, dass jedes der beiden Signale, die aus den Korrelationen mit dem ersten bzw. dem zweiten Hilfssignal resultieren, über ein Bandpassfilter (19, 21) und eine Detektorvorrichtung (20, 22) einem Eingang eines Differenzierglieds (24) zugeführt wird, wobei das Bandpassfilter und die Detektorvorrichtung Bestandteil der Bewertungsschaltungen sind.

5. Annäherungsradar nach Anspruch 4, dadurch gekennzeichnet, dass der Ausgang des Differenzierglieds (24) über ein Tiefpassfilter (25) mit einem Komparator (26) mit zwei Schwellwerten verbunden ist, und dass der Komparator und das Tiefpassfilter ebenfalls in den Bewertungsschaltungen enthalten sind.

6. Annäherungsradar nach Anspruch 5, dadurch gekennzeichnet, dass die beiden Schwellwerte des Komparators (26) entgegengesetzte Vorzeichen haben.

FIG. 1

FIG. 2